# EUROPEAN PATENT APPLICATION

(11) **EP 2 247 101 A2**
(43) Date of publication of application: **03.11.2010**
(21) Application number: 09711644.6
(22) Date of filing: 17.02.2009
(51) Int. Cl.: H04N 5/44, H04N 7/173

(54) **METHOD AND APPARATUS FOR USING API-BASED IPTV SERVICE**

(30) Priority: 19.02.2008 US 29829 P; 08.05.2008 US 51454 P; 14.07.2008 US 80332 P
(71) Applicant: Samsung Electronics Co., Ltd., Suwon-si, Gyeonggi-do 442-742 (KR)
(72) Inventor: HWANG, In-Chul, Suwon-si Gyeonggi-do 443-727 (KR); JIN, Ho, Yongin-si Gyeonggi-do 448-514 (KR); RHIM, Eun-Hee, Yongin-si Gyeonggi-do 446-720 (KR); KIM, Mun-Jo, Suwon-si Gyeonggi-do 441-735 (KR)
(74) Representative: Fearnside, Andrew Simon
(86) International application number: PCT/KR2009/000737
(87) International publication number: WO 2009/104884

(57) **Abstract**

A method and apparatus for controlling a device relaying an IPTV service, of a device using the IPTV service, are required. Application programming interfaces (APIs) that are used by a first device using the IPTV service in order to access the IPTV service relayed by a second device that is included in the same residential network as that of the first device are suggested.

## Description

### TECHNICAL FIELD

The present invention relates to a method and apparatus for using an Internet protocol television (IPTV) service, and more particularly, to a method and an apparatus for using an IPTV service based on an application programming interface (API).

### BACKGROUND ART

Internet protocol television (IPTV) service is a service for providing information, moving picture contents, and TV broadcasting through an IP network, that is, an ultra-high speed Internet network. As services combining communication and broadcasting has become widely available, interest in IPTV services has increased. Therefore, wide distribution of IPTV services may largely affect the content industry and electric appliances, as well as the communication and broadcasting industries.

According to the conventional art, in order for an IPTV service subscriber to use the IPTV service through the IP network, the subscriber requires a set-top box that varies depending on an IPTV vendor. Only the user having the IPTV set-top box that is manufactured according to specifications set by the IPTV service provider may use the IPTV service of the corresponding IPTV service provider. For example, when there are three IPTV service providers, that is, company A, company B, and company C, subscribers who bought the set-top box of company A may only use the IPTV service provided by company A, and they should buy an additional set-top box of company B or company C in order to subscribe to the IPTV service provided by company B or company C. The above problem of compatibility between the IPTV service and the set-top box limits a range of selection, and thus, quality of the IPTV service may be degraded and expansion of the IPTV service may be restricted.

In order to address the above compatibility problem, The Open IPTV Forum (OIPF) has been recently established to discuss standardization of the set-top box. In this forum, a common standard that is independent from the IPTV service providers and providing the service subscribers with the IPTV service based on the common standard are being discussed.

The OIPF aims to make an interface and a hardware platform that are not dependent upon the IPTV service providers so that the subscriber may easily use the IPTV services provided by a plurality of IPTV service providers. According to OIPF architecture, the subscriber may use the IPTV services provided by a plurality of different IPTV service providers even when he/she does not have different set-top boxes, and thus, the range of services that may be selected by the subscriber can be expanded.

In order for the subscriber to use the IPTV services provided by the plurality of different IPTV service providers, functional architecture according to the OIPF includes devices for relaying services of the plurality of IPTV service providers to a residential network. Examples of the relaying devices include entities such as an application gateway (AG), an IP Multimedia Subsystem (IMS) gateway (IG), and a content and service protection (CSP) gateway (CG) according to the functional architecture of the OIPF. The above relaying devices receive the IPTV services provided from a provider network and relay the IPTV services to terminal devices in the residential network.

### BRIEF DESCRIPTION OF THE DRAWINGS

FIG. 1 is a block diagram of residential network architecture in an Internet protocol television (IPTV) system according to an embodiment of the present invention;
FIG. 2 is a block diagram of a first device using an IPTV service according to an embodiment of the present invention;
FIGS. 3A and 3B are diagrams showing types of holding application programming interfaces (APIs) according to an embodiment of the present invention; and
FIG. 4 is a flowchart illustrating a method of using an IPTV service according to an embodiment of the present invention.

### DETAILED DESCRIPTION OF THE INVENTION

### TECHNICAL PROBLEM

The present invention provides a method and an apparatus for using an Internet protocol television (IPTV) service by a first device via a second device that is included in a residential network to relay the IPTV service, and also provides a computer readable recording medium having embodied thereon a program for implementing the above method.

### TECHNICAL SOLUTION

### ADVANTAGEOUS EFFECTS

According to the present invention, a browser of a device that uses an Internet protocol television (IPTV) service includes application programming interfaces (APIs) that may control a device relaying the IPTV service, and thus, the IPTV service may be only subscribed to by accessing the relaying device via the browser.

### BEST MODE

According to an aspect of the present invention, there is provided an apparatus, which is a first device using an internet protocol television (IPTV) service that is relayed by a second device included in a same residential network as that of the first device, the first device comprising: an application driving unit for driving an application that is used to access the IPTV service; and a browser driving unit for driving a browser that provides the application with a driving environment for the application to access the IPTV service, wherein the browser includes an application programming interface (API) relating to discovery of the second device.

The second device is an IP multimedia subsystem (IMS) gateway (IG) device or an application gateway (AG) device according to a functional architecture of the open IPTV forum (OIPF).

The API comprises an API for providing the application with information about the number of IG devices or the number of AG devices included in the residential network.

The API comprises an API providing the application with information representing whether the IG device or the AG device is discovered in the residential network.

The API comprises an API providing the application with uniform resource locator (URL) information of the IG device or URL information of the AG device.

The API comprises at least one of APIs providing the application with information about methods supported by the IG device or the AG device.

The API comprises an API providing the application with information about an interval for discovering the IG device or the AG device in the residential network.

The API comprises an API for registering or canceling information about a function that is called back to the application by the browser, when a predetermined event occurs in the IG device or the AG device.

According to an aspect of the present invention, there is provided a method of using an IPTV service that is relayed by a second device in a residential network, in which a first device is included, the method comprising: driving a browser that provides a driving environment of an application used to access the IPTV service; and accessing the IPTV service by driving the application, wherein the browser comprises an API relating to discovery of the second device.

According to another aspect of the present invention, there is provided a computer readable recoding medium storing a computer readable program for executing the method for discovering device.

### MODE OF THE INVENTION

Hereinafter, embodiments of the present invention will be described with reference to accompanying drawings.

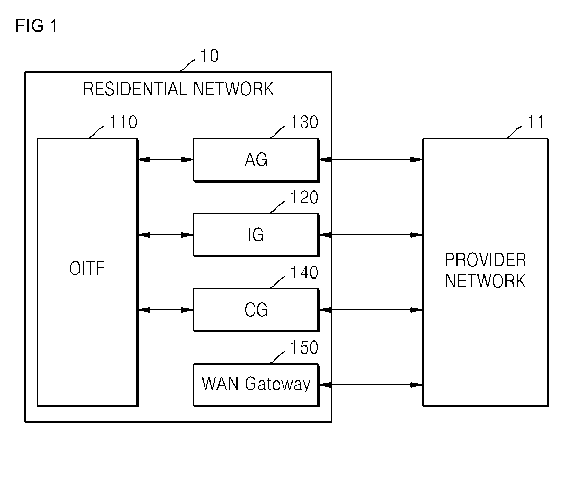

FIG. 1 shows residential network architecture of an Internet protocol television (IPTV) system according to an embodiment of the present invention. FIG. 1 shows a system structure of the residential network according to functional architecture of an open I PTV.

Referring to FIG. 1, the residential network 10 of the IPTV system according to the current embodiment of the present invention includes an open IPTV terminal functional (OITF) device 110, an IP Multimedia Subsystem (IMS) gateway (IG) device 120, an application gateway (AG) device 130, a content and service protection (CSP) gateway (CG) device 140, and a wide-area network (WAN) gateway device 150. FIG. 1 shows a case where the devices 110 through 150 of the residential network 10 exist as separate devices. However, the above devices 110 through 150 may be modules included in one device.

An IPTV service is provided from a provider network 11 to the residential network 10, and the IG device 120, the AG device 130, the CG device 140, and the WAN gateway device 150 receive the IPTV service to relay the IPTV service to the OITF device 110.

The OITF device 110 is a device that finally consumes the IPTV services provided from a plurality of IPTV service providers, that is, the OITF device 110 selects one of the plurality of IPTV service providers according to an input of the user and uses the IPTV service provided by the selected IPTV service provider. The OITF device 110 may be a TV that finally receives and uses the service.

The IG device 120 is a device that allows access of the OITF device 100 to the IPTV service related to an IP multimedia subsystem. The IG device 120 receives the IPTV service provided from the provider network 11 and relays the IPTV service to the OITF device 110. The IG device 120 interacts with the OITF device 110 by using a predetermined protocol that is defined for interactions between internal devices of the residential network 10. The IG device 120 requests the provider network 11 for the IPTV service according to an IPTV service request of the OITF device 110, and receives the IPTV service and relays the IPTV service to the OITF device 110.

The AG device 130 receives an application and relays the application to the OITF device 110. When a predetermined application is required to use the IPTV service, the AG device 130 receives the application from the provider network 11 and provides the OITF device 110 with the received application. The AG device 130 is an optional device that is required only when the OITF device 110 requires the application.

The CG device 140 is an optional device that is required to convert IPTV content and service protection of an external network into protection (for example, Digital Transmission Copy Protection over Internet Protocol (DTCP-TP)) that is compatible with the OITF device.

The WAN gateway device 150 is an essential device supporting a physical connection between the residential network 10 and the provider network 11.

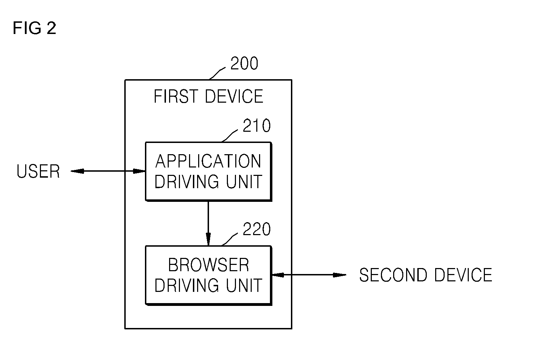

FIG. 2 is a block diagram of a first device 200 using an IPTV service according to an embodiment of the present invention.

Referring to FIG. 2, the first device 200 according to the current embodiment includes an application driving unit 210 and a browser driving unit 220. The first device 200 is a device using the IPTV service that is relayed by a second device that is included in the same residential network as that of the first device 200, and corresponds to the OITF device 110 of FIG. 1. In addition, the second device is a device for relaying the IPTV service in the residential network, and may correspond to the IG device or the AG device according to the functional architecture of the open IPTV.

The application driving unit 210 drives an application using the IPTV service. The application driven by the application driving unit 210 may be a user interface for accessing the IPTV service provided by the IPTV service provider, for example, web pages provided by the IPTV service provider.

The browser driving unit 220 provides a driving environment of the application driven by the application driving unit 210. For example, the browser driving unit 220 may drive a browser that is a base for driving the web pages. The browser may be a declarative application environment (DAE) according to the open IPTV specification.

The browser provides an object that is required when the application driven by the application driving unit 210 accesses the IPTV service via the second device. The object may be an application programming interface (API), and according to the current embodiment, an API for controlling the second device in order to use the IPTV service.

The API for controlling the second device may relate to discovering the second device that is the relaying device for relaying the IPTV service in the same residential network as that of the first device 200.

The API relating to the discovery of the second device may be an API that provides the application with the number of the IG devices existing in the residential network or the number of the AG devices in the residential network. It is not necessary that only one IG device be formed in the residential network, that is, a plurality of IG devices or a plurality of AG devices for relaying the IPTV services of a plurality of IPTV service providers may exist in the residential network. Therefore, the browser includes the API that provides the application with the information about the number of IG devices or the number of AG devices in the residential network.

When the application driven by the application driving unit 210 calls the API that provides the information about the number of IG devices or AG devices, the API of the browser driven by the browser driving unit 220 returns the information about the number of IG devices or AG devices to the application.

When the API is defined as an object method, the object method is executed to detect the number of the IG devices or the number of the AG devices when the application calls the API, and then, the information about the number is returned to the application. On the other hand, when the API is defined as an object property, the number of the IG devices or the number of the AG devices is detected and the information about the number is defined as the object property in advance, and then, the object property is returned to the application right after the application calls the API.

The API relating to the discovery of the second device may be an API that provides the application with information about whether the IG device or the AG device is discovered in the residential network.

When the application driven by the application driving unit 210 calls the API that provides the information about whether the IG device or the AG device is discovered in the residential network, the API of the browser driven by the browser driving unit 220 returns a Boolean value that represents whether the IG device or the AG device is discovered to the application.

If the API is defined as an object method, the object method is executed when the application calls the API, and then, the information representing whether the IG device or the AG device is discovered is returned to the application. On the other hand, if the API is defined as an object property, the information representing whether the IG device or the AG device is discovered is defined as the object property in advance, and then, the object property is returned to the application right after the application calls the API.

The API relating to the discovery of the second device may be an API that provides the application with a uniform resource locator (URL) of the IG device or a URL of the AG device.

When the application driven by the application driving unit 210 calls the API that provides the application with the URL of the IG device or the AG device included in the same residential network, the API of the browser driven by the browser driving unit 220 returns the URL information of the IG device or the URL information of the AG device to the application.

When the API is defined as an object method, the object method is executed when the application calls the API to determine the URL of the IG device or the URL of the AG device, and then, the determined URL information is returned to the application. On the other hand, when the API is defined as an object property, the URL of the IG device or the URL of the AG device is defined as the object property in advance, and then, the object property is returned to the application right after the application calls the API.

When the application calls the API providing the URL information of the IG device or the AG device, the application may call the API by specifying an identifier of the IG device or the AG device, or a service identifier. That is, if there are a plurality of IG devices or a plurality of AG devices in the residential network, an identifier of a certain IG device or AG device may be specified and transferred to the browser when the API is called, in order to specify of which IG device or which AG device the URL information is requested. In addition, even the same IG device or the same AG device may have different URLs according to the provided services, and thus, the service identifier may be specified and transferred to the browser when the API is called. When the access to the IG device or the AG device by the first device is performed by each method, the URL may vary depending on the method, and thus, a method identifier may be specified and transferred to the browser when the API is called.

The API relating to the discovery of the second device may be an API that provides the application with information representing whether the IG device or the AG device supports a certain method.

When the application driven by the application driving unit 210 calls the API providing the application with the information representing whether the IG device or the AG device supports a certain method, the API of the browser driven by the browser driving unit 220 returns a Boolean value representing whether the IG device or the AG device supports the certain method to the application. When the application uses the IPTV service, it is required to know whether the IG device or the AG device supports the certain method relating to the usage of the IPTV service. For example, when the application uses the IPTV service providing a chatting function, an 'INVITE' method of a session initiation protocol (SIP) protocol in the IMS should be used via the IG device in order to invite a counterpart to the chatting. In this case, the counterpart can be invited by using the 'INVITE' method only when it is recognized whether the IG device supports the 'INVITE' method of the SIP protocol. Therefore, the API representing whether the IG device or the AG device supports the certain method may be used in the above case.

If the API is defined as an object method, the object method is executed when the application calls the API, and then, the Boolean value representing whether the IG device or the AG device supports the certain method is returned to the application. On the other hand, if the API is defined as an object property, the Boolean value representing whether the IG device or the AG device supports the certain method is defined as the object property in advance, and then, the object property is returned to the application right after the application calls the API.

When the application calls the API providing the application with the information representing the IG device or the AG device supports the certain method, a kind of method may be specified. Therefore, the name of the method may be specified and transferred to the browser when the API is called, or an identifier (for example, a hexadecimal identifier) instead of the name of the method may be specified and transferred to the browser when the API is called.

The API relating to the discovery of the second device may be an API relating to a discovering interval of the IG device or the AG device. The API relating to the discovering interval may be an API that provides the application with information about the interval of discovering a new IG device or a new AG device, or an API for setting the interval of discovering the new IG device or the new AG device, when a new IG device or a new AG device is connected to the residential network.

If the API is defined as an object method, the object method is executed when the application calls the API, and then, the information about the discovering interval of the IG device or the AG device is returned to the application, or a new discovering interval is set. On the other hand, if the API is defined as an object property, the object property including the information about the discovering interval of the IG device of the AG device is returned to the application or a new discovering interval is defined as a new object property, when the application calls the API.

The API relating to the discovery of the second device may be an API relating to a function that is called back when the IG device or the AG device is discovered. The browser may call back a certain function to the application when the IG device or the AG device is discovered. For example, when the application notifies the user about the connection of the IG device or the AG device by using a pop-up window, a function that is called back for activating the pop-up window is required to be set. To do this, the browser provides the application with the API relating to the callback function when the IG device or the AG device is discovered.

The API may be defined as an object method to set the callback function when the IG device or the AG device is connected to the residential network.

In addition, the API may be defined as an object property to write the information about the callback function, and then, the object property is transferred to the object property when the IG device or the AG device is connected to the residential network in order to call back a certain function.

The API relating to the discovering of the second device may be an API providing the application with a device description of the IG device or a device description of the AG device.

If the API is defined as an object method, the browser executes the object method when the application calls the API, and then, returns the device description of the IG device or the device description of the AG device to the application. On the other hand, if the API is defined as an object property, the browser defines the device description of the IG device or the device description of the AG device as the object property, and then, returns the object property to the application when the application calls the API.

The API for controlling the second device may be an API relating to a usage of communication service via the IPTV network. The APIs used by the first device 200 when the first device 200 communicates with a device outside the residential network via the IPTV network are the APIs relating to the usage of the communication service.

The API relating to the usage of the communication service may be an API for discovering the service provider.

When the application driven by the application driving unit 210 calls the API for discovering the service provider, the API of the browser driven by the browser driving unit 220 returns information about the discovered service provider to the application. The information about the service provider may be URL information of the service provider.

When the application calls the API for discovering the service provider, a domain name of the service provider may be specified and then the API is called. That is, when the application wants the information about a certain service provider, the name of the desired service provider to be discovered may be specified when the API is called.

The API relating to the usage of the communication service may be an API relating to an IMS network registration for registering the first device in the IMS network.

When the application driven by the application driving unit 210 calls the API relating to the IMS network registration, the API of the browser driven by the browser driving unit 220 registers the first device 200 in the IMS network, and returns a Boolean value representing the registration result to the application. When the application calls the API relating to the IMS network registration, a device identifier of the first device 200 that is registered in the IMS network may be specified.

The API relating to the usage of the communication service may be an API for starting and ending a unicast session. A session communicating with the device outside the residential network may be the unicast session, and thus, the browser provides the application with the API for starting or ending the unicast session.

When the application driven by the application driving unit 210 calls the API for starting or ending the unicast session, the API of the browser driven by the browser driving unit 220 starts or ends the unicast session and returns the result to the application.

When the application calls the API for starting or ending the unicast session, a kind of the session, an identifier of the content transmitted by the session, and a session identifier may be specified.

The API relating to the usage of the communication service may be an API for starting or ending a multicast session. The session communicating with a device outside the residential network may be the multicast session, and thus, the browser provides the application with the API for starting or ending the multicast session.

When the application driven by the application driving unit 210 calls the API for starting or ending the multicast session, the API of the browser driven by the browser driving unit 220 starts or ends the multicast session and returns the result to the application.

Like the API for starting or ending the unicast session, when the API for starting or ending the multicast session is called, a kind of the session, an identifier of the content transmitted by the session, and the session identifier may be specified.

The API relating to the usage of the communication service may be an API for transmitting an instant message. When the application transmits an instant message to a device outside the residential network, the browser provides the application with the API for transmitting the instant message.

When the application driven by the application driving unit 210 calls the API for transmitting the instant message, the API of the browser driven by the browser driving unit 220 transmits the instant message to the external device, and returns a Boolean value representing the transmission result to the application.

When the application calls the API for transmitting the instant message, the application may specify a content of the message, an identifier of the user transmitting the message, and an identifier of the user receiving the message.

The API relating to the usage of the communication service may be an API for transmitting a chat message. When the application starts a chatting session with a device outside the residential network and transmits/receives the chat message, the browser provides the application with the API for transmitting the chat message.

When the application driven by the application driving unit 210 calls the API for transmitting the chat message, the API of the browser driven by the browser driving unit 220 transmits the chat message to the external device and returns a Boolean value of the transmission result to the application.

When the application calls the API for transmitting the chat message, the application may specify content of the message, an identifier of the user transmitting the message, a destination URL of the chat message, an identifier of the chatting session, and a chat type.

The API relating to the communication service may be an API for transmitting or setting presence information. The browser provides the application with the API that may transmit presence information representing the present state of the first device 200 to a device outside the residential network or may set the presence information.

When the application driven by the application driving unit 210 calls the API for transmitting or setting the presence information, the API of the browser driven by the browser driving unit 220 transmits the presence information to the external device or newly sets the presence information, and then, returns a Boolean value of the transmission or set result to the application. The presence information may include information about the present state of the first device 200, for example, location, availability, and preference of the first device 200.

When the application calls the API for transmitting or setting the presence information, an identifier of the first device 200 and the status of the user may be specified. The information relating to the preference of the user, for example, service usage list or program list of the user of the first device 200, also may be specified when the application calls the API.

The API for controlling the second device may be an API for processing a predetermined event transmitted from the second device. When the predetermined event is transmitted from the second device, the API notifies the application of the receipt so that the application may perform a certain operation according to the occurrence of the event.

The API for processing the received event may be an API relating to a function that is call back in order to notify the application about the receipt of the event from the second device. When the predetermined event occurs while the first device 200 uses the IPTV service, the browser may call back a certain function. For example, when the application shows the message transmitted from the external device while using the IPTV service to the user of the first device 200 through a pop-up window, a function called back for activating the pop-up window is to be set. To do this, the browser provides the application with the API relating to the function that is called back when the predetermined event is transmitted from the second device.

When the API is defined as an object method, the object method is executed when the application calls the API, and then, the function that is called back when the predetermined event occurs may be set, withdrawn, or changed. When the application calls the API to set the function that is called back, the application may transmit an identifier of the occurring event and information about the call back function to the browser. In addition, when the application calls the API to withdrawn the setting of the callback function, the application may transmit the information about the identifier of the event, the setting of which is to be withdrawn, to the browser.

In addition, the API may be defined as an object property to write the information about the callback function, and then, the object property may be transmitted to the application in order to call back the certain function when the predetermined event is transmitted from the second device.

The API for processing the received event may be an API relating to an application that operates to process the received event when the event is transmitted from the second device. When the predetermined event occurs while the first device 200 uses the IPTV service, the browser may drive a certain application in order to process the predetermined event. For example, when the application receives the chat message from an external device while using the IPTV service, the application for using the chatting service should be driven. To do this, the browser provides the application with the API relating to the application that is driven when the predetermined event is transmitted from the second device.

When the API is defined as an object method, the object method is executed when the application calls the API so that the application that is driven when the predetermined event occurs may be set, withdrawn, or changed. When the application to be driven is set by calling the API, an identifier of the occurring event, an identifier of the application that is driven, and information of the URL of the driven application may be transmitted to the browser. In addition, since the application to be driven may vary depending on the service provider, the information about the service provider may also be transmitted to the browser.

When the application calls the API to withdraw the setting of the application to be driven, an identifier of the application, the setting of which is to be withdrawn, and information about the URL of the application that is driven, may be transmitted to the browser.

In addition, when the API is defined as an object property, the information about the application that is driven is written on the object property, and then, the object property may be transmitted to the application to drive the certain application when the predetermined event is transmitted from the second device.

The API for controlling the second device may be an API that is required for the first device 200 to interact with the second device. The browser provides the application with the API that helps the first device 200 interact with the IG device in the residential network to facilitate the use of the IPTV service.

The API required for the interaction with the second device may be an API for setting a session description protocol (SDP). The first device 200 sets the SDP in order to set a streaming session and receive streaming multimedia data from outside and the browser provides the application with the API for setting the SDP.

The API required for the interaction with the second device may be an API for obtaining information about a public service identifier (PSI). In order for the application of the first device 200 to receive a predetermined service from the device outside the residential network through the IMS core network, the application should recognize the PSI. Therefore, the browser provides the application with the API that is used by the application in order to obtain the information about the PSI.

The API for interacting with the second device may be an API for obtaining a domain name of the service provider. When the API for obtaining the domain name of the service provider is additionally defined, discovering the service provider and discovering the service may be performed efficiently.

The API for interacting with the second device may be an API for obtaining a new 'CallID'. In order to use the IPTV service based on the SIP, the CallIDs of the sessions should not overlap each other. Therefore, the browser provides the application with the API for obtaining the CallIDs that vary depending on the sessions.

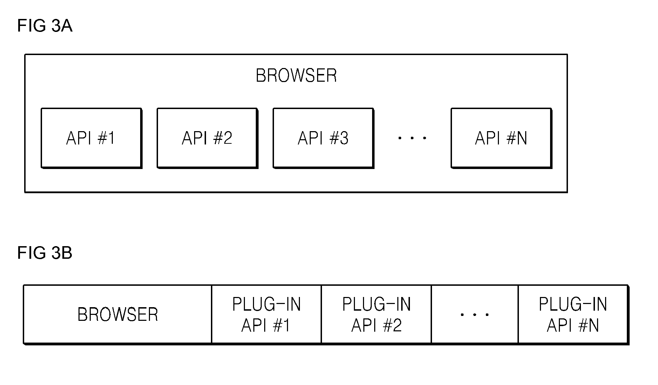

FIGS. 3A and 3B show types of holding the APIs according to the embodiment of the present invention.

The above described API according to the current embodiment may be objects embedded in the browser as shown in FIG. 3A, or may be objects attached to the browser as plug-ins as shown in FIG. 3B.

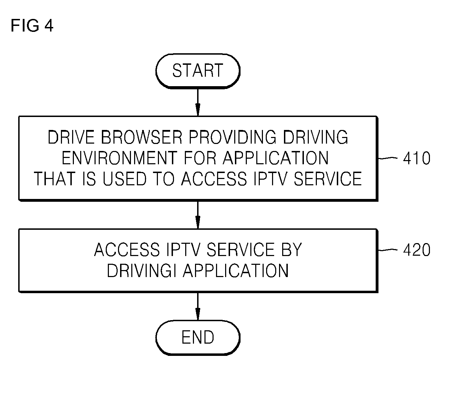

FIG. 4 is a flowchart illustrating a method of using the IPTV service according to an embodiment of the present invention.

Referring to FIG. 4, the device using the IPTV service according to the embodiment of the present invention, that is, the first device 200, drives the browser that provides a driving environment of the application that is used to access the IPTV service (S410).

The browser provides the application with an object that is required when the application accesses the IPTV service through the second device. The object may be an API, and according to an embodiment of the present invention, may be an API for controlling the second device in order to use the IPTV service.

The API for controlling the second device includes at least one of the API relating to the discovery of the second device that relays the IPTV service, the API relating to the usage of the communication service through the IPTV network, the API for processing the predetermined event transmitted from the second device, and the API that is required in the interaction between the first device 200 and the second device.

In operation S420, the first device 200 drives the application based on the browser, and accesses the IPTV service. The application may access the IPTV service by driving the application based on the above described APIs.

As described above, according to the present invention, the browser of the device that uses the IPTV service includes the APIs that may control the device relaying the IPTV service, and thus, the IPTV service may be easily used only by accessing the relaying device via the browser.

While this invention has been particularly shown and described with reference to preferred embodiments thereof, it will be understood by those of ordinary skill in the art that various changes in form and details may be made therein without departing from the spirit and scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

For example, the device using the IPTV service in the residential network according to the exemplary embodiment of the present invention may include a bus coupled to each of the units in the device shown in FIG. 2, and at least one processor coupled to the bus. In addition, the device may include a memory that is coupled to the bus in order to store commands, received messages, and generated messages, and that is coupled to the at least one processor for performing the above commands.

The embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), etc. The computer readable recording medium can also be distributed over network coupled computer systems so that the computer readable code is stored and executed in a distributed fashion.

## Claims

1. An apparatus, which is a first device using an internet protocol television (IPTV) service that is relayed by a second device included in a same residential network as that of the first device, the first device comprising:
an application driving unit for driving an application that is used to access the IPTV service; and
a browser driving unit for driving a browser that provides the application with a driving environment for the application to access the IPTV service,
wherein the browser includes an application programming interface (API) relating to discovery of the second device.

2. The apparatus of claim 1, wherein the second device is an IP multimedia subsystem (IMS) gateway (IG) device or an application gateway (AG) device according to a functional architecture of the open IPTV forum (OIPF).

3. The apparatus of claim 2, wherein the API comprises an API for providing the application with information about the number of IG devices or the number of AG devices included in the residential network.

4. The apparatus of claim 2, wherein the API comprises an API providing the application with information representing whether the IG device or the AG device is discovered in the residential network.

5. The apparatus of claim 2, wherein the API comprises an API providing the application with uniform resource locator (URL) information of the IG device or URL information of the AG device.

6. The apparatus of claim 2, wherein the API comprises at least one of APIs providing the application with information about methods supported by the IG device or the AG device.

7. The apparatus of claim 2, wherein the API comprises an API providing the application with information about an interval for discovering the IG device or the AG device in the residential network.

8. The apparatus of claim 2, wherein the API comprises an API for registering or canceling information about a function that is called back to the application by the browser, when a predetermined event occurs in the IG device or the AG device.

9. A method of using an IPTV service that is relayed by a second device in a residential network, in which a first device is included, the method comprising:
driving a browser that provides a driving environment of an application used to access the IPTV service; and
accessing the IPTV service by driving the application,
wherein the browser comprises an API relating to discovery of the second device.

10. The method of claim 9, wherein the second device is an IP multimedia subsystem (IMS) gateway (IG) device or an application gateway (AG) device according to a functional architecture of the open IPTV forum (OIPF).

11. The method of claim 10, wherein the API comprises an API for providing the application with information about the number of IG devices or the number of AG devices included in the residential network.

12. The method of claim 10, wherein the API comprises an API providing the application with information representing whether the IG device or the AG device is discovered in the residential network.

13. The method of claim 10, wherein the API comprises an API providing the application with uniform resource locator (URL) information of the IG device or URL information of the AG device.

14. The method of claim 10, wherein the API comprises at least one API providing the application with information about methods supported by the IG device or the AG device.

15. The method of claim 10, wherein the API comprises an API providing the application with information about an interval for discovering the IG device or the AG device in the residential network.

16. The method of claim 10, wherein the API comprises an API for registering or cancelling information about a function that is called back to the application by the browser, when a predetermined event occurs in the IG device or the AG device.

17. A computer readable recording medium having embodied thereon a computer program for executing the method according to one of claims 1 through 8.
